(19) Europäisches Patentamt European Patent Office Office européen des brevets

(11) **EP 2 881 176 B1**

(12) **EUROPEAN PATENT SPECIFICATION**

(45) Date of publication and mention of the grant of the patent:
**16.03.2016 Bulletin 2016/11**

(51) Int Cl.:
***B02C 25/00*** *(2006.01)*    ***B02C 2/04*** *(2006.01)*

(21) Application number: **13196168.2**

(22) Date of filing: **09.12.2013**

(54) **Cone crusher shaft position measurement sensor arrangement**

Kegelbrecher-Wellenpositionsmessungs-Sensoranordnung

Agencement de capteur de mesure de position d'arbre de broyeur conique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.06.2015 Bulletin 2015/24**

(73) Proprietor: **Sandvik Intellectual Property AB 811 81 Sandviken (SE)**

(72) Inventors:
• **Svensson, Rickard**
  **233 42 Svedala (SE)**
• **Belotserkovskiy, Konstantin**
  **211 17 Malmö (SE)**
• **Shirkin, Mikhail**
  **191124 St Petersburg (RU)**

(56) References cited:
**EP-A1- 2 116 307     EP-A1- 2 596 868**
**FR-A3- 2 463 640     US-A- 5 580 003**

## Description

Technical Field of the Invention

The present invention relates to a cone crusher shaft position measurement sensor arrangement for measuring a position of a crushing shaft of a cone crusher of the type comprising an inner crushing shell, which is supported by a crushing head mounted on the crushing shaft, and an outer crushing shell which is supported on a crusher frame.

The present invention further relates to a cone crusher and to a method of measuring a position of a crushing shaft of a cone crusher.

Background of the Invention

A cone crusher may be utilized for efficient crushing of material, such as stone, ore, etc. into smaller sizes. The cone crusher is provided with an inner crushing shell and an outer crushing shell forming between them a crushing chamber. The inner crushing shell is arranged on a crushing head which is made to perform a gyratory movement to effect crushing of material in the crushing chamber.

EP 2 116 307 A1 discloses an inertia type cone crusher having a crushing head on which the inner crushing shell is mounted. The crushing head is mounted on a crushing shaft which is encircled by a cylindrical sleeve. An unbalance weight is mounted on one side of the cylindrical sleeve. During operation the cylindrical sleeve is rotated. The rotation makes the unbalance weight swing outwardly, which forces the crushing head to perform the gyratory movement, which results in crushing of material. A measurement disc R is fixed to the cylindrical sleeve. Three sensors measure respective vertical distances to the measurement disc R. Based on these measurements it is possible to determine the angle of the shaft, and, hence, to determine the degree of gyration of the crushing head.

EP 2 596 868 discloses a method of controlling the operation of a cone crusher using a control system configured for measuring an amount of material present in a feed hopper to control the crusher when the feed material falls below a minimum amount. The controller comprises different sensors including in particular an rpm sensor measuring the rpm of a drive shaft and a gyration sensor to determine the location and/or motion of the gyration of the crushing head.

Summary of the invention

An object of the present invention is to provide a cone crusher shaft position measurement sensor arrangement which provides for measuring the position of the crushing shaft more accurately than what is possible in the prior art.

A further object of the present invention is to provide a cone crusher shaft position measurement sensor arrangement which is more robust and which has a longer life than the corresponding devices of the prior art.

These and other objects are achieved by means of a cone crusher shaft position measurement sensor arrangement for measuring a position of a crushing shaft of a cone crusher of the type comprising an inner crushing shell, which is supported by a crushing head mounted on the crushing shaft, and an outer crushing shell which is supported on a crusher frame, wherein the cone crusher shaft position measurement sensor arrangement comprises a target means adapted to be connected to the crushing shaft and to move in a horizontal plane, the target means comprising a sensor target, the sensor arrangement further comprising at least one first sensor element for sensing the horizontal position of the sensor target.

An advantage of this sensor arrangement is that it provides for accurate measurement of the position of the crushing shaft, since the swinging movement of the crushing shaft is translated by the target means into a horizontal movement which can be measured with a high accuracy.

According to one embodiment the target means comprises a circular target disc. An advantage of this embodiment is that a position of a sensor target arranged on a circular target disc can be measured with a high accuracy.

According to one embodiment the sensor target comprises a circular sensor target extending around the target means. An advantage of this embodiment is that the horizontal position of the sensor target can be measured with high precision regardless of the present rotational position of the target means.

According to one embodiment the at least one first sensor element comprises a horizontal sensing array which extends in a horizontal direction and is arranged for sensing a horizontal position of the sensor target. An advantage of this embodiment is that the present horizontal distance between the crusher central axis CC and the target means can be measured with a high precision.

According to one embodiment the sensor arrangement comprises a sensor table having a horizontal sliding surface over which the target means may slide in the horizontal plane. An advantage of this embodiment is that the horizontal sliding surface provides for a movement of the target means in the horizontal plane that is well controlled. Thereby, the horizontal position of the sensor target can be measured with a high accuracy.

According to one embodiment the at least one first sensor element comprises an inductive sensor. An advantage of this embodiment is that inductive sensors are very robust with regard to splashing lubricating oil that is present inside the crusher. Thereby a measurement is obtained that is not interfered by lubricating oil. Furthermore, inductive sensors often give fast measurement signals, which means that any changes in the position of the crushing shaft are registered quickly. Still further, an inductive sensor has a good ability to accurately measure the position of the sensor target in high shock and high vibration environments. According to one embodiment the inductive type first sensor element may comprise a sensing array, which may comprise coils arranged in a coil array. The coils of the sensing array provide for accurate measurement of the horizontal position of the sensor target.

According to one embodiment said sensor target comprises a metallic sensor target formed from a magnetic metallic material, such as steel. An advantage of this embodiment is that a metallic sensor target is robust and may be detected by various efficient sensors, including inductive sensors.

According to one embodiment the sensor target has a horizontal width which is in the range of 2 to 25 mm, more preferably in the range of 5 to 20 mm. An advantage of this embodiment is that sensor targets of this size provide robust design and accurate measurement of the horizontal position of the sensor target.

According to one embodiment the sensor arrangement comprises at least the first sensor element and additionally a second sensor element, wherein the first and second sensor elements are arranged to sensing the horizontal position of the sensor target in at least two different positions in the horizontal plane. An advantage of this embodiment is that the position of the crushing shaft can be determined in a X-Y coordinate system. Thereby, irregularities with regard to, for example, the feeding of material to the crushing chamber can be detected.

According to one embodiment the first sensor element and the second sensor element each comprises a horizontal sensing array extending towards a crusher central axis CC, wherein there is a horizontal angle $\beta$ of at least 10°, more preferably an angle $\beta$ of 20° to 160°, and most preferably an angle $\beta$ of 60° to 120 °, between the respective horizontal sensing arrays. An advantage of this embodiment is that an angle of at least 10°, more preferably at least 20° makes it easier to measure the position of the crushing shaft with a high accuracy.

According to one embodiment the sensor arrangement further comprises a calculating device arranged for recalculating a horizontal position of the sensor target measured by the at least one first sensor element into an angle $\alpha$ between the crusher central axis CC and the shaft central axis SC of the crushing shaft. An advantage of this embodiment is that the position of the crushing shaft is obtained as an angle, which is in some situations the preferred manner of handling the measured information.

According to one embodiment the sensor arrangement further comprises a target means connector arranged to transfer the swinging movement of the crushing shaft into a horizontal movement of the target means. An advantage of this embodiment is that it provides for very efficient and accurate transformation of the swinging movement of the crushing shaft into a horizontal movement of the target means, whereby the measurement of the position of the sensor target of the target means provides an accurate indication of the true position of the crushing shaft.

According to one embodiment a target means connector arranged to transfer the swinging movement of the crushing shaft into a horizontal movement of the target means comprises a ball-joint type outer surface which is in contact with a cylindrical inner periphery of the target means. An advantage of this embodiment is that efficient transfer of the swinging movement of the crushing shaft to a horizontal movement of the target means is obtained.

According to one embodiment the vertical movement of the target means is restricted to be less than +/- 5 mm, more preferably less than +/- 2 mm, in the vertical direction. A limited movement in the vertical direction is beneficial for the measurement accuracy, since the vertical distance between the sensor target and the sensor element will be relatively constant.

According to one embodiment, the target means is held in a sensor table space which limits the vertical movements of the target means. The sensor table space is an efficient manner of limiting the vertical movement of the target means to improve measurement accuracy.

According to one embodiment the target means is provided with target means openings extending vertically through the target means. The target means openings reduce the weight of the target means. Furthermore, the target means openings provides for lubricating fluid, such as lubricating oil, lubricating a surface over which the target means slides.

According to another aspect of the present invention, there is provided a cone crusher comprising an inner crushing shell, which is supported by a crushing head mounted on a crushing shaft, and an outer crushing shell which is supported on a crusher frame, wherein the cone crusher comprises a cone crusher shaft position measurement sensor arrangement according to any one of the embodiments described hereinabove. An advantage of this cone crusher is that the position of the crushing shaft can be measured with a high accuracy, which provides for efficient control of the crushing operation.

According to one embodiment the cone crusher is an inertia cone crusher. An advantage of this embodiment is that in an inertia cone crusher an accurate control of the position of the crushing shaft is important for reasons of efficiency and operational safety. Therefore, the sensor arrangement described hereinabove provides particular advantages for this type of crusher. According to a preferred embodiment the inertia cone crusher comprises a cylindrical sleeve encircling the crushing shaft and an unbalance weight mounted on one side of the cylindrical sleeve. An advantage of this embodiment is that an efficient and robust inertia cone crusher is obtained.

A further object of the present invention is to provide an efficient method of measuring a position of a crushing shaft of a cone crusher.

This object is achieved by means of a method of measuring a position of a crushing shaft of a cone crusher of the type comprising an inner crushing shell, which is supported by a crushing head mounted on the crushing shaft, and an outer crushing shell which is supported on a crusher frame, wherein the method comprises connecting a target means to the crushing shaft, moving the target means in a horizontal plane in concordance with the movement of the crushing shaft, and sensing the horizontal position of the target means by at least one first sensor element.

An advantage of this method is that efficient, robust and accurate measurement of the position of the crushing shaft is provided for.

According to one embodiment the method further comprises recalculating a horizontal position of the target means measured by the at least one first sensor element into an angle $\alpha$ between the crusher central axis CC and the shaft central axis SC of the crushing shaft.

According to one embodiment the method further comprises measuring the horizontal position of the target means by at least a first and a second sensor element in two different positions in the horizontal plane. An advantage of this embodiment is that the position of deviations in the feed of material to the crushing chamber can be determined.

Further objects and features of the present invention will be apparent from the following detailed description and claims.

Brief description of the Drawings

The invention is described in more detail below with reference to the appended drawings in which:

Fig. 1 is a schematic side view, in cross-section, of an inertia cone crusher.
Fig. 2 is an enlarged side view, in cross-section, of a sensor arrangement.
Fig. 3a is three-dimensional view, partly in cross-section, of the sensor arrangement of Fig. 2.
Fig. 3b is a top view of the sensor arrangement of Fig. 2.
Fig. 4 is a diagram illustrating example results obtained using the sensor arrangement of Fig. 3b.
Fig. 5 is a schematic top view illustrating one example of how a position of a crushing shaft can be determined.

Description of Preferred Embodiments

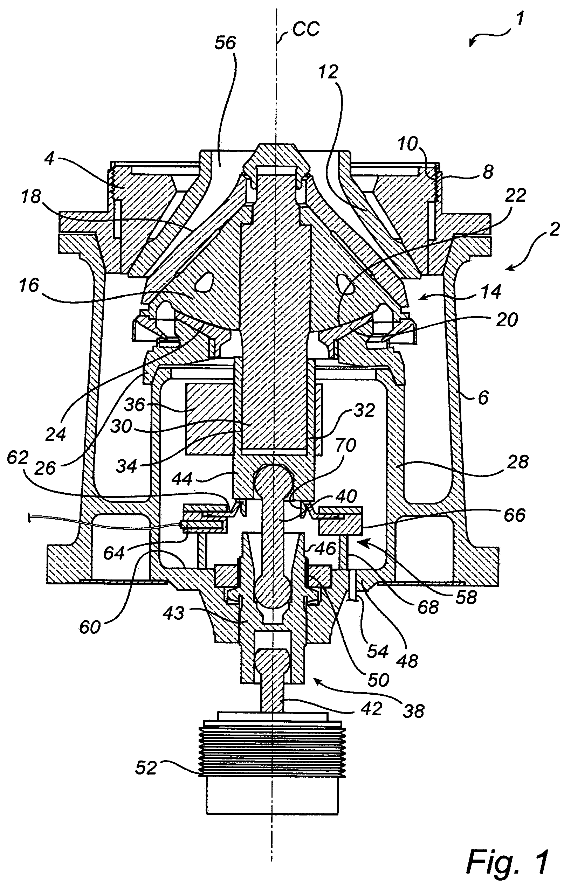

Fig. 1 illustrates a cone crusher 1 in accordance with one embodiment of the present invention. The cone crusher illustrated in Fig. 1 is of the inertia cone crusher type. It will be appreciated that the present invention is applicable also to other cone crusher types. The cone crusher 1 comprises a crusher frame 2 in which the various parts of the crusher 1 are mounted. The crusher frame 2 comprises an upper frame portion 4, and a lower frame portion 6. The upper frame portion 4 has the form of a bowl and is provided with an outer thread 8 which co-operates with an inner thread 10 of the lower frame portion 6. The upper frame portion 4 supports, on the inside thereof, an outer crushing shell 12. The outer crushing shell 12 is a wear part which may be made from, for example, manganese steel.

The lower frame portion 6 supports an inner crushing shell arrangement 14. The inner crushing shell arrangement 14 comprises a crushing head 16, which has the form of a cone and which supports an inner crushing shell 18, which is a wear part which may be made from, for example, a manganese steel. The crushing head 16 rests on a spherical cone crusher bearing 20. The cone crusher bearing 20 has an upper bearing surface 22 which is in bearing contact with a lower surface 24 of the crushing head 16. The bearing surface 22 of the crusher bearing 20 has an at least partly concave shape, and the lower surface 24 of the crushing head 16 has an at least partly convex shape. The cone crusher bearing 20 rests on a bearing support 26 which is mounted on an inner cylindrical portion 28 of the lower frame portion 6.

The crushing head 16 is mounted on a crushing shaft 30. The crushing shaft 30 extends through the cone crusher bearing 20. Hence, the cone crusher bearing 20 forms a "collar" encircling the crushing shaft 30. At a lower end thereof, the crushing shaft 30 is encircled by a cylindrical sleeve 32. The cylindrical sleeve 32 is provided with an inner cylindrical bearing 34 making it possible for the cylindrical sleeve 32 to rotate around the crushing shaft 30.

An unbalance weight 36 is mounted on one side of the cylindrical sleeve 32. At its lower end the cylindrical sleeve 32 is connected to a vertical drive shaft 38. The drive shaft 38 comprises a ball spindle 40, a pulley shaft 42, an intermediate shaft 43 connecting the ball spindle 40 to the pulley shaft 42, an upper connector 44 which connects the ball spindle 40 to the cylindrical sleeve 32, and a lower connector 46 which is arranged on the intermediate shaft 43 and which connects the ball spindle 40 to the intermediate shaft 43. The two connectors 44, 46 are connected to the ball spindle 40 in a non-rotating manner, such that rotational movement can be transferred from the pulley shaft 42 to the cylindrical sleeve 32 via the intermediate shaft 43 and the ball spindle 40.

A bottom portion 48 of the lower frame portion 6 comprises a vertical cylindrical drive shaft bearing 50 in which the vertical drive shaft 38 is supported. A motor (not shown) is arranged for driving a pulley 52 which is connected to the pulley shaft 42, below the drive shaft bearing 50. Lubricant is collected at the inside of the bottom portion 48 and is returned to a lubricant pump (not shown) via a lubricant return pipe 54.

The outer and inner crushing shells 12, 18 form between them a crushing chamber 56 to which material that is to be crushed is supplied. The discharge opening of the crushing chamber 56, and thereby the crushing capacity, can be adjusted by means of turning the upper frame portion 4, by means of the threads 8, 10, such that the distance between the shells 12, 18 is adjusted.

When the crusher 1 is in operation the drive shaft 38 is rotated by means of the not shown motor. The rotation of the drive shaft 38 causes the sleeve 32 to rotate and as an effect of that rotation the sleeve 32 is swung outwards by means of the unbalance weight 36, displacing the unbalance weight 36 further away from the crusher central axis CC of the crusher 1, in response to the centrifugal force to which the unbalance weight 36 is exposed. Such displacement of the unbalance weight 36 and of the cylindrical sleeve 32 to which the unbalance weight 36 is attached is allowed thanks to the ball spindle 40 and thanks to the fact that the sleeve 32 may slide somewhat, thanks to the cylindrical bearing 34, in the vertical direction along the crushing shaft 30. The combined rotation and swinging of the cylindrical sleeve 32 with unbalance weight 36 mounted thereon causes an inclination of the crushing shaft 30, and makes the crushing shaft 30 gyrate, such that material is crushed between the outer and inner crushing shells 12, 18 forming between them the crushing chamber 56.

During operation of the crusher 1 it is important to know the manner in which the crushing shaft 30 moves to be able to properly control the operation of the crusher 1. The movement of the crushing shaft 30 will be influenced by, among other things, the amount and the properties of the material forwarded to the crushing chamber 56, the distribution of the material around the crushing chamber 56, the rpm at which the drive shaft 38 rotates the cylindrical sleeve 32, and the existence of any pieces of uncrushable material in the crushing chamber 56. To this end a cone crusher shaft position measurement sensor arrangement 58 is arranged at a bottom 60 of the lower frame portion 6. The sensor arrangement 58 comprises a target means 62 arranged to move in a horizontal direction in concordance with the movement of the upper connector 44. Since the upper connector 44 is connected to the cylindrical sleeve 32, which in turn is connected, via cylindrical bearing 34, to the crushing shaft 30, the target means 62 will move in a horizontal plane in concordance with the movement of the crushing shaft 30.

The sensor arrangement 58 further comprises at least one first sensor element 64. The first sensor element 64 is arranged for detecting the horizontal position of the target means 62 in a manner which will be described in more detail hereinafter. The sensor arrangement 58 comprises a sensor table 66. The sensor table 66 supports in a sliding manner the target means 62 such that the target means 62 can move in the horizontal direction. Furthermore, the sensor table 66 also provides a support for the first sensor element 64. The sensor table 66 is mounted to the lower frame portion 6 by means of table supporting legs 68. A target means connector 70 is mounted to the upper connector 44 to transfer the movement of the upper connector 44 to the target means 62.

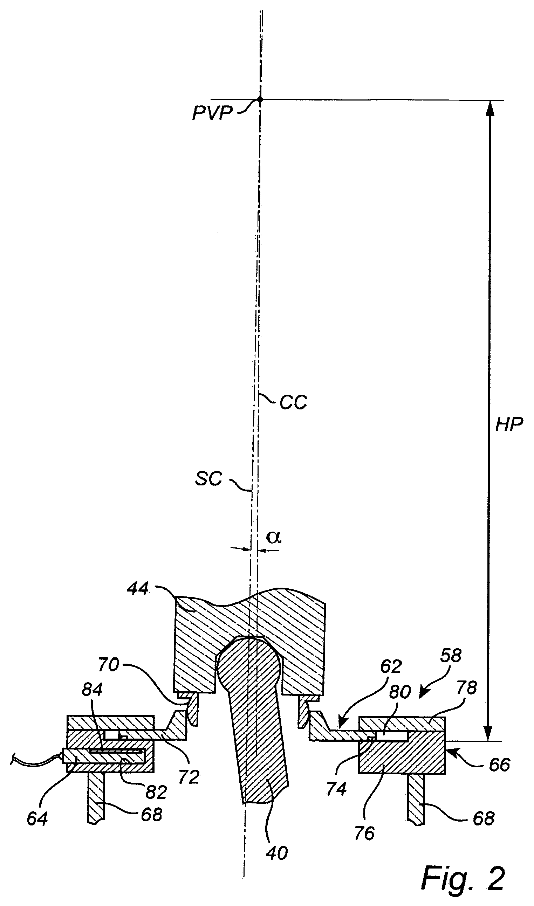

Fig. 2 illustrates the sensor arrangement 58 in more detail, and when the crusher 1 is in operation. When the crusher 1 is in operation the drive shaft 38 rotates the sleeve 32, and the unbalance weight 36 shown in Fig. 1 will swing the cylindrical sleeve 32, and thereby the crushing shaft 30, to the side. Thereby, a shaft central axis SC, which is the central axis of the crushing shaft 30, will deviate from the crusher central axis CC. Hence, there will be an angle $\alpha$ between the shaft central axis SC and the crusher central axis CC. This angle $\alpha$ will provide crucial information about the operation of the crusher and is measured by means of the sensor arrangement 58.

The target means 62 comprises a circular target disc 72, which is preferably made from a non-conductive material, such as a polymer material, and a circular metallic sensor target 74 extending around the circular target disc 72. The sensor table 66 comprises a lower table plate 76 and an upper table cover 78 that may, in accordance with one embodiment, be formed from non-conductive materials, for example polymer materials. The lower table plate 76 and the upper table cover 78 form between them a sensor table space 80 in which the target disc 72 may move, sliding on the lower table plate 76. The sensor table space 80 limits the vertical movements of the target disc 72, preferably to such a degree that the target disc 72 can move less than +/- 5 mm, more preferably less than +/- 2 mm, in the vertical direction. The sensor table space 80 has a horizontal width which is larger than the diameter of the target disc 72, to account for the fact that the target disc 72 is swung to the side upon operation of the crusher.

The crusher central axis CC and the shaft central axis SC intersect in a pivot point PVP. The vertical position of the pivot point PVP, and thereby a vertical distance HP between the pivot point PVP and the lower side of the metallic target 74, is set by the geometry, i.e. the radius, of the spherical cone crusher bearing 20 that supports the crushing head 16 and the crushing shaft 30, as illustrated in Fig. 1. Thereby, by determining the horizontal position of the metallic target 74 in relation to the crusher central axis CC it becomes possible to calculate, based on such horizontal position and the known vertical distance HP, the angle $\alpha$ between the shaft central axis SC and the crusher central axis CC.

The first sensor element 64 is arranged in a sensor space 82 formed in the lower table plate 76. The sensor space 82 extends under the sensor table space 80 to enable the first sensor element 64 to sense a present position of the metallic sensor target 74 of the target disc 72.

The first sensor element 64 comprises an elongate horizontal sensing array 84 which extends in a horizontal direction and towards the crusher central axis CC. In this embodiment the first sensor element 64 comprises an inductive position sensor. Such an inductive position sensor generates an inductive field which shifts along a sensitive surface and detects a metallic sensor target in the detection range of the inductive field. The inductive sensor comprises several coils arranged in a coil array. Hence, in this embodiment the horizontal sensing array 84 comprises a coil array. The inductive sensor 64 calculates the current position of the sensor target 74 and provides output as, for example, a distance-proportional analog signal. The inductive sensing field extends along the horizontal length of the horizontal sensing array 84. The first sensor element 64 is thus able to detect the horizontal position along the horizontal sensing array 84 of the metallic sensor target 74 without any physical contact therewith. The sensor output is received by a control unit (not shown) connected to the first sensor element 64.

During operation of the sensor arrangement 58, the first sensor element 64 emits an alternating electro-magnetic sensing field along the sensing array 84. When the metallic sensor target 74 enters the sensing field eddy currents are induced in the target 74 which reduces the signal amplitude of the first sensor element 64 and triggers a change of state at the sensor element 64 output received by the control unit. In this embodiment an inductive sensor called PMI-F110 commercially available from Pepperl+Fuchs GmbH, Mannheim, DE, was used. This type of inductive sensor comprises coils arranged in a coil array.

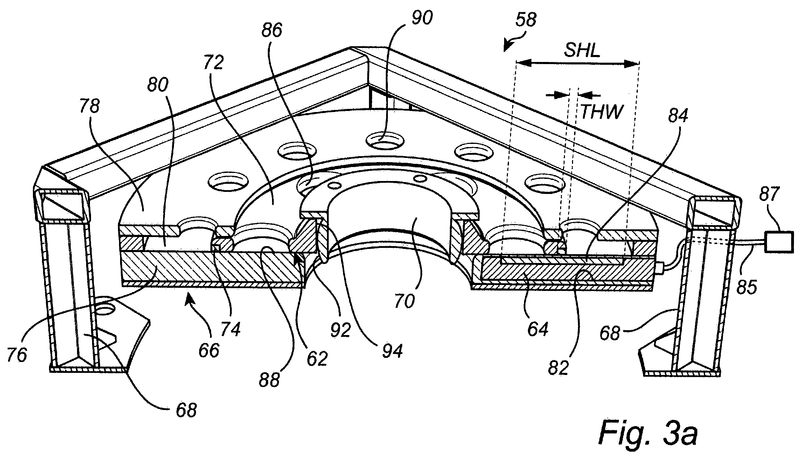

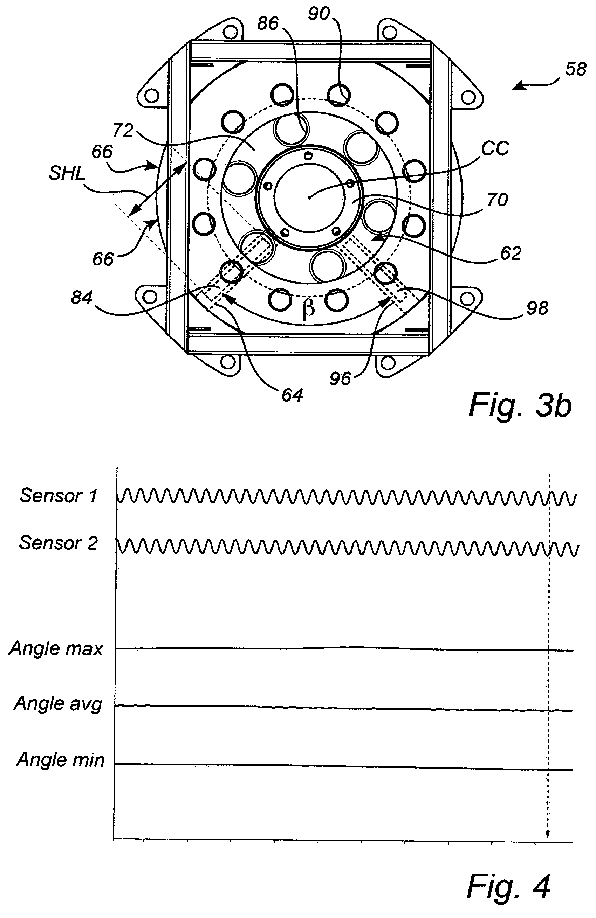

Figs. 3a and 3b illustrate the sensor arrangement 58 in more detail. As shown in Fig. 3a the horizontal sensing array 84 of the first sensor element 64 may typically have a horizontal length SHL, as seen in parallel to the radius of the target disc 72, which is in the range of 50 to 500 mm.

The metallic sensor target 74 may have a horizontal width THW which is in the range of, for example, 2 to 25 mm. The horizontal width THW of the metallic sensor target 74 is adapted to the type of first sensor element 64 that is utilized. In accordance with one example, the horizontal width THW of the metallic sensor target 74 may be 11 mm. The first sensor element 64 is arranged in the lower table plate 76 in such a position that the metallic sensor target 74 will be located above the horizontal sensing array 84 in the movement of the circular target disc 72. The horizontal sensing array 84 of the first sensor element 64 may detect the present horizontal position of the metallic sensor target 74 with a high accuracy.

In accordance with one embodiment, the circular target disc 72 is made from an isolating material, such as a plastic material, in order not to interfere with the desired electrical interference between the sensor target 74 and the horizontal sensing array 84 of the first sensor element 64.

The circular target disc 72 may be provided with target disc openings 86. The target disc openings 86 reduce the weight of the target disc 72. Furthermore, the target disc openings 86 provides for lubricating fluid, such as lubricating oil, splashing from the spherical cone crusher bearing 20 illustrated in Fig. 1 to flow through the target disc 72, via the target disc openings 86, and further to the sensor table space 80. The lubricating fluid may, in the sensor table space 80, provide for lubrication of a horizontal sliding surface 88 of the lower table plate 76, over which the target disc 72 slides in the horizontal plane. Additionally, the upper table cover 78 may be provided with table cover openings 90, through which lubricating fluid may also flow to the sensor table space 80 for further improved lubrication.

The target means connector 70 has a ball-joint type outer surface 92 which is in contact with a cylindrical inner periphery 94 of the target disc 72. Thereby, the swinging movement of the crushing shaft 30, to which the target means connector 70 is connected via the upper connector 44 and the cylindrical sleeve 32, as shown in Fig. 1, is translated into a horizontal movement of the target disc 72. The horizontal movement of the target disc 72 is measured by the first sensor element 64 as the elongate horizontal sensing array 84 thereof detects the present horizontal position of the metallic sensor target 74. Based on the known geometry of the crusher 1 the measured present horizontal position of the metallic sensor target 74 can be recalculated into the present angle $\alpha$ between the shaft central axis SC and the crusher central axis CC, illustrated in Fig. 2. For example, an outwardly horizontal movement of 70 mm of the metallic sensor target 74, compared to the position at a stopped crusher, as detected by the first sensor element 64 may be recalculated into an angle $\alpha$ of 2° between the shaft central axis SC and the crusher central axis CC. An electrical wire, schematically indicated as 85 in Fig. 3a, may transmit electrical signals from the first sensor element 64 to a calculating device, such as a process computer, schematically indicated as 87 in Fig. 3a, that recalculates the measured horizontal position to the angle $\alpha$. Thereby, the first sensor element 64 provides for determining, via the measured horizontal position of the sensor target 74 of the target disc 72, the present angle $\alpha$. Based on this information the operation of the crusher 1 can be controlled.

Fig. 3b illustrates the sensor arrangement 58 as seen from the top thereof. In accordance with one embodiment the sensor arrangement may comprise the first sensor element 64 and additionally also a second sensor element 96. The second sensor element 96 may typically be of the same design as the first sensor element 64 and may, as such, be of the type PMI-F110 commercially available from Pepperl+Fuchs GmbH, Mannheim, DE. The second sensor element 96 has an elongate horizontal sensing array 98 which is of a similar size and design as the horizontal sensing array 84. Looking in the horizontal plane, the horizontal sensing array 98 of the second sensor element 96 extends towards the crusher central axis CC at an angle β of, for example, 90° to the horizontal sensing array 84 of the first sensor element 64.

By measuring the position of the metallic sensor target 74 by a first sensor element 64 and a second sensor element 96, that have different positions, it is possible to determine the position of the crushing shaft 30 in X-Y coordinates. This is particularly beneficial when the supply of material to the crushing chamber 56, shown in Fig. 1, is uneven. Uneven supply of material to the crushing chamber 56 tends to make the crushing shaft 30 to swing at a higher angle in some directions, and at lower angle in other directions. By measuring the position of the crushing shaft 30 by means of the first and second sensor elements 64, 96 it becomes possible to determine where around the crushing chamber 56 the maximum and minimum angle α occurs, and to take steps to minimize the difference between the maximum and minimum angle α. Furthermore, if the difference between maximum and minimum angle is large this may be an indication that there is uncrushable objects in the crushing chamber 56. Hence, a large difference between maximum and minimum angle may be a trigger for stopping the crusher to remove the uncrushable object.

Fig. 4 illustrates one example of results obtained by using the sensor arrangement 58. The measurement "Sensor 1" illustrates a measurement signal obtained from the first sensor element 64 measuring the horizontal position of the metallic sensor target 74 located on the target disc 72. The measurement "Sensor 2" illustrates a measurement signal obtained from the second sensor element 96 measuring the horizontal position of the metallic sensor target 74 located on the target disc 72. As can be seen the measurement signals "Sensor 1" and "Sensor 2" are both close to sinus-shaped, and the two signals are displaced in relation to each other, due to the angle β between the two sensor elements 64, 96. The curve "Angle min" illustrates the minimum angle α between the shaft central axis SC and the crusher central axis CC during a turn of the drive shaft 38 as determined from the measured horizontal positions, and the curve "Angle max" illustrates the maximum angle α between the shaft central axis SC and the crusher central axis CC during a turn of the drive shaft 38 as determined from the measured horizontal positions. Finally, the curve "Angle avg" illustrates the average angle α between the shaft central axis SC and the crusher central axis CC during a turn of the drive shaft 38 as determined from the measured horizontal positions.

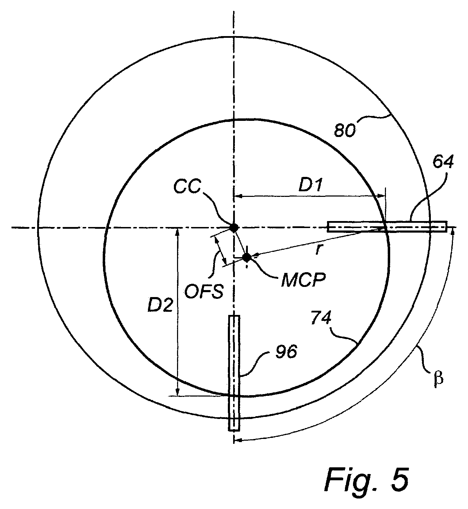

Fig. 5 illustrates, schematically, how a current position of the crushing shaft 30 can be determined during operation of the gyratory crusher 1 shown in Fig. 1. In Fig. 5 it is shown, schematically and in a top view, how the metallic sensor target 74 moves inside the sensor table space 80. The present position of the metallic target 74 is measured simultaneously by means of the first sensor element 64 and the second sensor element 96, that are located at an angle β of 90° to each other, as seen in the horizontal plane. The centre MCP of the metallic target 74 is currently, due to the outward swinging of the unbalance weight 36 shown in Fig. 1, located a horizontal distance OFS from the crusher central axis CC. Since the metallic target 74 is arranged on the circular target disc 72, as shown in, for example, Fig. 2, which moves in concordance with the movement of the crushing shaft 30, the horizontal distance OFS can be used, together with the known vertical distance HP from the metallic target 74 to the pivot point PVP, shown in Fig. 2, for calculation of the present angle α between the shaft central axis SC and the crusher central axis CC.

The horizontal distance OFS can be calculated based on the distance D1 from the crusher central axis CC to the metallic target 74 as measured by the first sensor element 64, the distance D2 from the crusher central axis CC to the metallic target 74 as measured by the second sensor element 96, and the radius r of the metallic target 74. The following equation can be used:

$$\text{OFS} = \text{square root } ( \, r^2 - D1^*D2^* \text{ square root } (4^*r^2/(D1^2 + D2^2) -1) \, )$$

It will be appreciated that numerous variants of the embodiments described above are possible within the scope of the appended claims.

Hereinbefore it has been described that the cone crusher shaft position measurement sensor arrangement 58 comprises a first sensor element 64, and optionally also a second sensor element 96. It will be appreciated that the sensor arrangement 58 may also comprise further sensor elements. The reason for using further sensor elements could be to further increase the accuracy of measuring the position of the crushing shaft, and/or to have one or more sensor elements as back-up, in case of failure of one sensor element.

To summarize, a cone crusher shaft position measurement sensor arrangement (58) is arranged for measuring a position of a crushing shaft (30) of a cone crusher (1) of the type comprising an inner crushing shell (18), which is supported by a crushing head (16) mounted on the crushing shaft (30), and an outer crushing shell (12) which is supported on a crusher frame (2). The sensor arrangement (58) comprises a target means (62) adapted to be connected to the crushing shaft (30) and to move in a horizontal plane in concordance with the movement of the crushing shaft (30). The target means (62) comprises a sensor target (74). The sensor arrangement (58) further comprises at least one first sensor element (64) for sensing the horizontal position of the sensor target (74).

**Claims**

1. A cone crusher shaft position measurement sensor arrangement for measuring a position of a crushing shaft (30) of a cone crusher (1) of the type comprising an inner crushing shell (18), which is supported by a crushing head (16) mounted on the crushing shaft (30), and an outer crushing shell (12) which is supported on a crusher frame (2), **characterised in that** the cone crusher shaft position measurement sensor arrangement (58) comprises a target means (62) adapted to be connected to the crushing shaft (30) and to move in a horizontal plane, the target means (62) comprising a sensor target (74), the sensor arrangement (58) further comprising at least one first sensor element (64) for sensing the horizontal position of the sensor target (74).

2. A sensor arrangement according to claim 1, wherein the target means (62) comprises a circular target disc (72).

3. A sensor arrangement according to any of the preceding claims, wherein the sensor target comprises a circular sensor target (74) extending around the target means (62).

4. A sensor arrangement according to any of the preceding claims, wherein the at least one first sensor element (64) comprises a horizontal sensing array (84) which extends in a horizontal direction and is arranged for sensing a horizontal position of the sensor target (74).

5. A sensor arrangement according to any of the preceding claims, wherein the sensor arrangement (58) comprises a sensor table (66) having a horizontal sliding surface (88) over which the target means (62) may slide in the horizontal plane.

6. A sensor arrangement according to any of the preceding claims, wherein the at least one first sensor element (64) comprises an inductive sensor.

7. A sensor arrangement according to any of the preceding claims, wherein the sensor arrangement comprises at least the first sensor element (64) and additionally a second sensor element (96), wherein the first and second sensor elements (64, 96) are arranged for sensing the horizontal position of the sensor target (74) in at least two different positions in the horizontal plane.

8. A sensor arrangement according to claim 7, wherein the first sensor element (64) and the second sensor element (96) each comprises a horizontal sensing array (84, 98) extending towards a crusher central axis (CC), wherein there is a horizontal angle $\beta$ of at least 10°, more preferably an angle $\beta$ of 20° to 160°, between the respective horizontal sensing arrays (84, 98).

9. A sensor arrangement according to any of the preceding claims, further comprising a calculating device (87) arranged for recalculating a horizontal position of the sensor target (74) measured by the at least one first sensor element (64) into an angle $\alpha$ between the crusher central axis (CC) and the shaft central axis (SC) of the crushing shaft (30).

10. A sensor arrangement according to any of the preceding claims, further comprising a target means connector (70) arranged to transfer the swinging movement of the crushing shaft (30) into a horizontal movement of the target means (62).

11. A cone crusher comprising an inner crushing shell (18), which is supported by a crushing head (16) mounted on a crushing shaft (30), and an outer crushing shell (12) which is supported on a crusher frame (2), **characterised in that** the cone crusher comprises a cone crusher shaft position measurement sensor arrangement (58) according to any of the preceding claims.

12. A cone crusher according to claim 11, wherein the cone crusher is an inertia cone crusher (1) comprising a cylindrical sleeve (32) encircling the crushing shaft (30) and an unbalance weight (36) mounted on one side of the cylindrical sleeve (32).

13. A method of measuring a position of a crushing shaft of a cone crusher of the type comprising an inner crushing shell (18), which is supported by a crushing head (16) mounted on the crushing shaft (30), and an outer crushing shell (12) which is supported on a crusher frame (2), **characterised by** connecting a target means (62) to the crushing shaft (30), moving the target means (62) in a horizontal plane in concordance with the movement of the crushing shaft (30), and sensing the horizontal position of the target means (62) by at least one first sensor element (64).

**14.** A method according to claim 13, further comprising recalculating a horizontal position of the target means (62) measured by the at least one first sensor element (64) into an angle α between the crusher central axis (CC) and the shaft central axis (SC) of the crushing shaft (30).

**15.** A method according to any one of claims 13-14, further comprising measuring the horizontal position of the target means (62) by at least a first and a second sensor element (64, 96) in two different positions in the horizontal plane.

**Patentansprüche**

**1.** Sensoranordnung zur Messung der Wellenposition eines Kegelbrechers, zum Messen der Position einer Brecherwelle (30) eines Kegelbrechers (1) von dem Typ, welcher eine innere Brechhülse (18) aufweist, die durch einen Brecherkopf (16) gehaltert wird, welcher auf der Brecherwelle (30) montiert ist, und eine äußere Brechhülse (12) aufweist, die an einem Brecherrahmen (2) gehaltert ist, **dadurch gekennzeichnet, dass** die Sensoranordnung (58) für die Messung der Position der Welle des Kegelbrechers eine Zieleinrichtung (62) aufweist, die dafür ausgelegt ist, mit der Brecherwelle (30) verbunden zu werden und sich in einer horizontalen Ebene zu bewegen, wobei die Zieleinrichtung (62) ein Sensorziel (74) aufweist und die Sensoranordnung (58) weiterhin zumindest ein erstes Sensorelement (64) aufweist, um die horizontale Position des Sensorzieles (74) zu erfassen.

**2.** Sensoranordnung nach Anspruch 1, wobei die Zieleinrichtung (62) eine kreisförmige Zielscheibe (72) aufweist.

**3.** Sensoranordnung nach einem der vorstehenden Ansprüche, wobei das Sensorziel ein kreisförmiges Sensorziel (74) aufweist, welches sich um die Zieleinrichtung (62) herum erstreckt.

**4.** Sensoranordnung nach einem der vorstehenden Ansprüche, wobei das zumindest eine erste Sensorelement (64) ein horizontales Erfassungsfeld (84) aufweist, das sich in horizontaler Richtung erstreckt und das dafür ausgelegt ist, eine horizontale Position des Sensorzieles (74) zu erfassen.

**5.** Sensoranordnung nach einem der vorstehenden Ansprüche, wobei die Sensoreinrichtung (58) einen Sensortisch (66) aufweist, der eine horizontale Gleitfläche (88) hat, über welche die Zieleinrichtung (62) in der horizontalen Ebene gleiten kann.

**6.** Sensoranordnung nach einem der vorstehenden Ansprüche, wobei das zumindest eine erste Sensorelement (64) einen induktiven Sensor aufweist.

**7.** Sensoranordnung nach einem der vorstehenden Ansprüche, wobei die Sensoranordnung zumindest das erste Sensorelement (64) und zusätzlich ein zweites Sensorelement (96) aufweist, wobei die ersten und zweiten Sensorelemente (64, 96) dafür ausgelegt sind, die horizontale Position des Sensorzieles (74) in zumindest zwei verschiedenen Positionen in der horizontalen Ebene zu erfassen.

**8.** Sensoranordnung nach Anspruch 7, wobei das erste Sensorelement (64) und das zweite Sensorelement (96) jeweils ein horizontales Erfassungsfeld (84, 98) aufweisen, das sich in Richtung einer zentralen Achse (CC) des Brechers erstreckt, wobei zwischen den jeweiligen horizontalen Sensorarrays (84, 98) ein horizontaler Winkel von zumindest 10° oder bevorzugter ein Winkel β von 20° bis 160° zwischen den jeweiligen horizontalen Arrays (84, 98) vorliegt.

**9.** Sensoranordnung nach einem der vorstehenden Ansprüche, welche weiterhin eine Berechnungseinrichtung (87) aufweist, die dafür ausgelegt ist, eine horizontale Position des Sensorzieles (74), welche durch das zumindest eine Sensorelement (64) gemessen wurde, in einen Winkel α zwischen der zentralen Achse (CC) des Brechers und der zentralen Wellenachse (SC) der Brecherwelle (30) ausgelegt ist.

**10.** Sensoranordnung nach einem der vorstehenden Ansprüche, welche weiterhin einen Verbinder (70) für Zieleinrichtungen aufweist, welcher dafür ausgelegt ist, eine Schwingbewegung der Brecherwelle (30) in eine horizontale Bewegung der Zieleinrichtung (62) umzusetzen.

**11.** Kegelbrecher mit einer inneren Brechhülse (18), die durch einen Brecherkopf (16) getragen wird, welcher auf einer Brecherwelle (30) montiert ist, und mit einer äußeren Brechhülse (12), welche auf einem äußeren Brecherrahmen (2) gehaltert ist, **dadurch gekennzeichnet, dass** der Kegelbrecher eine Sensoranordnung (58) zur Messung der Position der Welle eines Kegelbrechers nach einem der vorstehenden Ansprüche aufweist.

12. Kegelbrecher nach Anspruch 11, wobei der Kegelbrecher ein Trägheitskegelbrecher (1) ist, welcher eine zylindrische Hülle (32) aufweist, die die Brecherwelle (30) umgibt, und ein Unwuchtgewicht (36), welches auf einer Seite der zylindrischen Hülle (32) montiert ist.

13. Verfahren zum Messen der Position einer Brecherwelle eines Kegelbrechers von dem Typ, welcher eine innere Brecherhülse (18) aufweist, die durch einen Brecherkopf (16) gehaltert wird, der an der Brecherwelle (30) montiert ist, und eine äußere Brechhülse (12) aufweist, die an einem Brecherrahmen (2) gehaltert ist, **gekennzeichnet durch** Verbinden einer Zieleinrichtung (62) mit der Brecherwelle (30), Bewegen der Zieleinrichtung (62) in einer horizontalen Ebene gemäß der Bewegung der Brecherwelle (30), und Erfassen der horizontalen Position der Zieleinrichtung (62) **durch** zumindest ein erstes Sensorelement (64).

14. Verfahren nach Anspruch 13, welches weiterhin das Umrechnen einer horizontalen Position der Zieleinrichtung (62), gemessen durch das zumindest eine erste Sensorelement (64), in einen Winkel $\alpha$ zwischen der zentralen Achse (CC) des Brechers und der zentralen Wellenachse (SC) der Brecherwelle (30) aufweist.

15. Verfahren nach einem der Ansprüche 13-14, welches weiterhin das Messen der horizontalen Position der Zieleinrichtung (62) durch zumindest ein erstes und ein zweites Sensorelement (64, 96) in zwei verschiedenen Positionen in der horizontalen Ebene aufweist.

## Revendications

1. Agencement de capteur de mesure de position d'arbre de concasseur conique pour mesurer une position d'un arbre de concassage (30) d'un concasseur conique (1) du type comprenant une coque de concassage interne (18) qui est supportée par une tête de concassage (16) montée sur l'arbre de concassage (30) et une coque de concassage externe (12) qui est supportée sur un bâti de concasseur (2), **caractérisé en ce que** l'agencement de capteur de mesure de position d'arbre de concasseur conique (58) comprend un moyen formant cible (62) adapté pour être raccordé à l'arbre de concassage (30) et pour se déplacer dans un plan horizontal, le moyen formant cible (62) comprenant une cible de capteur (74), l'agencement de capteur (58) comprenant en outre au moins un premier élément de capteur (64) pour détecter la position horizontale de la cible de capteur (74).

2. Agencement de capteur selon la revendication 1, dans lequel le moyen formant cible (62) comprend un disque formant cible circulaire (72).

3. Agencement de capteur selon l'une quelconque des revendications précédentes, dans lequel la cible de capteur comprend une cible de capteur circulaire (74) s'étendant autour du moyen formant cible (62).

4. Agencement de capteur selon l'une quelconque des revendications précédentes, dans lequel le au moins un premier élément de capteur (64) comprend un réseau de détection horizontal (84) qui s'étend dans une direction horizontale et est agencé pour détecter une position horizontale de la cible de capteur (74).

5. Agencement de capteur selon l'une quelconque des revendications précédentes, dans lequel l'agencement de capteur (58) comprend une table de capteur (66) ayant une surface coulissante horizontale (88) sur laquelle le moyen formant cible (62) peut coulisser dans le plan horizontal.

6. Agencement de capteur selon l'une quelconque des revendications précédentes, dans lequel le au moins un premier élément de capteur (64) comprend un capteur inductif.

7. Agencement de capteur selon l'une quelconque des revendications précédentes, dans lequel l'agencement de capteur comprend au moins le premier élément de capteur (64) et de plus un second élément de capteur (96), dans lequel les premier et second éléments de capteur (64, 96) sont agencés pour détecter la position horizontale de la cible de capteur (74) dans au moins deux positions différentes dans le plan horizontal.

8. Agencement de capteur selon la revendication 7, dans lequel le premier élément de capteur (64) et le second élément de capteur (96) comprennent chacun un réseau de détection horizontal (84, 98) s'étendant vers un axe central de concasseur (CC), dans lequel il y a un angle horizontal β d'au moins 10°, encore de préférence un angle β de 20° à 160°, entre les réseaux de détection horizontaux (84, 98) respectifs.

9. Agencement de capteur selon l'une quelconque des revendications précédentes, comprenant en outre un dispositif de calcul (87) agencé pour recalculer une position horizontale de la cible de capteur (74) mesurée par le au moins un premier élément de capteur (64) dans un angle α entre l'axe central (CC) du concasseur et l'axe central d'arbre (SC) de l'arbre de concassage (30).

10. Agencement de capteur selon l'une quelconque des revendications précédentes, comprenant en outre un connecteur de moyen formant cible (70) agencé pour transférer le mouvement d'oscillation de l'arbre de concassage (30) en un mouvement horizontal du moyen formant cible (62).

11. Concasseur conique comprenant une coque de concassage interne (18) qui est supportée par une tête de concassage (16) montée sur un arbre de concassage (30) et une coque de concassage externe (12) qui est supportée sur un bâti de concasseur (2), **caractérisé en ce que** le concasseur conique comprend un agencement de capteur de mesure de position d'arbre de concasseur conique (58) selon l'une quelconque des revendications précédentes.

12. Concasseur conique selon la revendication 11, dans lequel le concasseur conique est un concasseur conique à inertie (1) comprenant un manchon cylindrique (32) encerclant l'arbre de concassage (30) et un poids non équilibré (36) monté sur un côté du manchon cylindrique (32).

13. Procédé pour mesurer une position d'un arbre de concassage d'un concasseur conique du type comprenant une coque de concassage interne (18) qui est supportée par une tête de concassage (16) montée sur l'arbre de concassage (30) et une coque de concassage externe (12) qui est supportée sur un bâti de concasseur (2), **caractérisé par** les étapes consistant à raccorder un moyen formant cible (62) à l'arbre de concassage (30), déplacer le moyen formant cible (62) dans un plan horizontal selon le mouvement de l'arbre de concassage (30) et détecter la position horizontale du moyen formant cible (62) grâce à au moins un premier élément de capteur (64).

14. Procédé selon la revendication 13, comprenant en outre l'étape consistant à recalculer une position horizontale du moyen formant cible (62) mesurée par le au moins un premier élément de capteur (64) dans un angle α entre l'axe central de concasseur (CC) et l'axe central d'arbre (SC) de l'arbre de concassage (30).

15. Procédé selon l'une quelconque des revendications 13 à 14, comprenant en outre l'étape consistant à mesurer la position horizontale du moyen formant cible (62) grâce à au moins un premier et un second élément de capteur (64, 96) dans deux positions différentes dans le plan horizontal.

Fig. 1

Fig. 2

*Fig. 3a*

EP 2 881 176 B1

Fig. 3b

Fig. 4

*Fig. 5*

**EP 2 881 176 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2116307 A1
- EP 2596868 A